# EUROPEAN PATENT APPLICATION

(11) **EP 3 663 363 A1**
(43) Date of publication of application: **10.06.2020**
(21) Application number: 18840295.2
(22) Date of filing: 31.05.2018
(51) Int. Cl.: C09C 3/10, C08K 3/22, C08K 3/26, C08K 3/36, C08L 1/02

(54) **CELLULOSE NANOFIBER-SUPPORTING INORGANIC POWDER AND METHOD FOR PRODUCING SAME**

(30) Priority: 01.08.2017 JP 2017149480
(71) Applicant: Shin-Etsu Chemical Co., Ltd., Tokyo 100-0004 (JP)
(72) Inventor: HOTTA Masakatsu, Annaka-shi Gunma 379-0224 (JP); NISHIMINE Masanobu, Annaka-shi Gunma 379-0195 (JP); OGATA Tomoya, Annaka-shi Gunma 379-0195 (JP); UENO Susumu, Tokyo 100-0004 (JP); TANAKA Masaki, Tokyo 100-0004 (JP)
(74) Representative: Wibbelmann, Jobst
(86) International application number: PCT/JP2018/020872
(87) International publication number: WO 2019/026405

(57) **Abstract**

The present invention is a cellulose nanofiber-supporting inorganic powder that includes a cellulose nanofiber and an inorganic powder, wherein the cellulose nanofiber is supported on the inorganic powder. Thus, the cellulose nanofiber may be readily and uniformly dispersed in a resin or rubber composition, and, by adding to the composition, a cellulose nanofiber-supporting inorganic powder capable of improving the physical properties of a resin or a rubber is provided.

## Description

### TECHNICAL FIELD

The present invention relates to a powder including a cellulose nanofiber and an inorganic powder and a production method thereof.

### BACKGROUND ART

A cellulose nanofiber (CNF) is a raw material obtained by chemically or mechanically fibrillating (opening) fibers constituting wood to a nano level. In particular, under the presence of a TEMPO (2,2,6,6-tetramethyl-1-piperidine-N-oxyl) catalyst, the cellulose is oxidized, further, by applying a mechanical fiber-opening process, the CNFs are found to be efficiently separated (see Patent Document 1), thus the CNFs became to be industrially mass-produced. The mass-produced CNFs are usually sold in a state dispersed in water or the like, and are used in this state in many cases.

Since the CNF has small environmental load and light weight and high strength, a research and development as a reinforcement filler of resin and rubber have been forwarded. However, because, as was described above, the CNF is sold in a state of an aqueous dispersion, when uniformly dispersing in the resin or rubber, there was difficulty in blending due to such as coagulation.

As a countermeasure against this, although there was proposed to modify hydroxyl groups of a cellulose molecule (see Patent Document 2), this modified CNF is also a diluted aqueous dispersion, this can be applied only to resins or rubbers that are water dispersible, and a large amount of water is required, there remains a problem also in productivity.

Furthermore, there is a report of improving the mechanical strength and heat resistance by blending in a silicone rubber after a part of hydroxyl groups of the cellulose fiber is treated with a silane coupling agent (see Patent Document 3). However, even when the CNF is treated with the silane-coupling agent, since in the treatment process, the CNFs coagulate fast to be a film-like or hard solid matter, they are not uniformly dispersed in the resin or rubber, thereby, a large improvement in the strength is difficult to achieve.

Furthermore, although there is proposed a method of producing a dry solid matter of the CNFs by making the modified CNFs into short fibers (see Patent Document 4), since an aspect ratio is lowered by making the fiber short, it is difficult to apply as a reinforcement filler of the resin and rubber.

From such a situation, a filler that is derived from the CNF and can be readily and uniformly dispersed in the resin and rubber has been demanded.

### CITATION LIST

### PATENT LITERATURE

Patent Document 1: Japanese Unexamined Patent Application Publication No. 2008-001728
Patent Document 2: Japanese Unexamined Patent Application Publication No. 2017-095611
Patent Document 3: Japanese Unexamined Patent Application Publication No. 2013-234268
Patent Document 4: Japanese Unexamined Patent Application Publication No. 2017-095664

### SUMMARY OF INVENTION

### TECHNICAL PROBLEM

The present invention was carried out to solve the above problem, and intends to provide cellulose nanofiber-supporting inorganic powder capable of readily and uniformly dispersing cellulose nanofibers in a resin or a rubber and capable of improving physical properties of the resin or rubber by adding to the composition, and a production method thereof.

### SOLUTION TO PROBLEM

In order to achieve the above object, the present invention provides a cellulose nanofiber-supporting inorganic powder that includes a cellulose nanofiber and an inorganic powder, and the cellulose nanofiber is supported on the inorganic powder.

The cellulose nanofiber-supporting inorganic powder like this can readily and uniformly disperse the cellulose nanofibers in a composition of a resin or a rubber, and by adding to the composition, physical properties of the resin or the rubber can be improved.

Furthermore, the cellulose nanofiber-supporting inorganic powder preferably contains the cellulose nanofiber in the range of 0.005 to 5 parts by mass relative to 100 parts by mass of the inorganic powder.

When such an amount of the cellulose nanofiber is contained, a sufficient reinforcement effect due to the cellulose nanofiber can be obtained, and flocculation between the cellulose nanofibers may be suppressed.

Furthermore, the cellulose nanofibers are preferable to have an average fiber diameter of 2 to 500 nm.

The cellulose nanofiber like this can maintain a fiber state of a high aspect ratio and can more surely obtain the reinforcement effect by utilizing nano dispersion.

Furthermore, the inorganic powder is preferable to be one or more kinds selected from silica, alumina, titanium dioxide, aluminum hydroxide, calcium carbonate, zinc carbonate, iron oxide, and carbon.

The inorganic powder like this is particularly preferable as a support of the cellulose nanofiber.

Furthermore, in the cellulose nanofiber-supporting inorganic powder, it is preferable that the cellulose nanofiber-supporting inorganic powder comprise the inorganic powder a surface of which is hydrophobized with a silicon-containing hydrophobizing agent, and the cellulose nanofiber a surface of which is not hydrophobized with the silicon-containing hydrophobizing agent.

Alternatively, it is preferable that the cellulose nanofiber-supporting inorganic powder comprise the inorganic powder and the cellulose nanofiber both surfaces of which are hydrophobized with a silicon-containing hydrophobizing agent.

When a surface of the inorganic powder, or both surfaces of the inorganic powder and cellulose nanofiber are hydrophobized like this, it is preferable because the inorganic powder tends to easily adsorb the cellulose nanofiber.

Furthermore, the present invention provides a method of producing cellulose nanofiber-supporting inorganic powder, the production method includes:
(1) a step of mixing an inorganic powder and a dispersion in which a cellulose nanofiber is dispersed in an aqueous solvent, and
(2) a step of distilling off the aqueous solvent from the mixture, followed by drying.

The production method of a cellulose nanofiber-supporting inorganic powder like this can readily produce a cellulose nanofiber-supporting inorganic powder that can readily and uniformly disperse the cellulose nanofibers in the composition of a resin or a rubber, and can improve physical properties of the resin or the rubber by adding to the composition.

Furthermore, it is preferable to use one that has a concentration of the cellulose nanofiber in the range of 0.01 to 5 mass% as the dispersion.

When the dispersion like this is used, the inorganic powder is made to sufficiently support the cellulose nanofibers.

Furthermore, it is preferable to use the cellulose nanofiber having an average fiber diameter of 2 to 500 nm.

The cellulose nanofiber like this can maintain a fiber state of a high aspect ratio, and can sufficiently obtain an reinforcement effect utilizing nano-dispersion.

Furthermore, it is preferable to use as the inorganic powder, at least one or more kinds selected from silica, alumina, titanium dioxide, aluminum hydroxide, calcium carbonate, zinc carbonate, iron oxide, and carbon.

The inorganic powder like this is particularly preferable as a support of the cellulose nanofiber.

Furthermore, before the step (1), it is preferable to contain a step of hydrophobizing in advance a surface of the inorganic powder with a silicon-containing hydrophobizing agent.

Alternatively, it is preferable that, in the step (1), a silicon-containing hydrophobizing agent be further added to the inorganic powder and the dispersion and mixed to hydrophobize both surfaces of the inorganic powder and the cellulose nanofiber with a silicon-containing hydrophobizing agent.

When a surface of the inorganic powder, or both surfaces of the inorganic powder and the cellulose nanofiber are hydrophobized, it is preferable because the cellulose nanofiber tends to be adsorbed by the inorganic powder.

### ADVANTAGEOUS EFFECTS OF INVENTION

As was described above, the cellulose nanofiber-supporting inorganic powder of the present invention can readily and uniformly disperse the cellulose nanofiber in the composition of the resin or rubber, and by adding to the composition, the physical properties of the resin or rubber can be improved. Furthermore, the production method of the cellulose nanofiber-supporting inorganic powder of the present invention can readily produce the cellulose nanofiber-supporting inorganic powder of the present invention like this.

### DESCRIPTION OF EMBODIMENTS

As was described above, it has been demanded to develop a filler derived from the CNF capable of being readily and uniformly dispersed in a resin or a rubber.

The present inventors found, after studying hard of the above problems, that when cellulose nanofibers are supported on an inorganic powder, the cellulose nanofibers can be readily and uniformly dispersed in a composition of a resin or a rubber, and when the cellulose nanofiber-supporting inorganic powder is added to the composition, the physical properties of the resin or rubber can be improved. Furthermore, the present inventors found that when the inorganic powder is mixed in a dispersion in which the cellulose nanofibers are dispersed in an aqueous solvent and dried, the cellulose nanofiber-supporting inorganic powder of the present invention can be readily produced, and came to completion of the present invention.

That is, the present invention is a cellulose nanofiber-supporting inorganic powder that includes a cellulose nanofiber and an inorganic powder, and the cellulose nanofiber is supported on the inorganic powder.

In what follows, the present invention will be detailed. However, the present invention isn't limited to these.

### (Cellulose Nanofiber-supporting Inorganic Powder)

A cellulose nanofiber-supporting inorganic powder of the present invention has cellulose nanofibers supported on an inorganic powder. In what follows, each of components will be detailed.

### (Cellulose Nanofiber (CNF))

Cellulose nanofibers are obtained by chemically or mechanically opening fibers of a cellulose raw material derived from plants or microbes, in the present invention any of these may be used. As an example of chemically opened one, an oxidized cellulose nanofiber obtained by oxidizing a hydroxyl group of a cellulose molecule with a TEMPO (2,2,6,6-tetramethyl-1-piperidine-N-oxyl) as a catalyst may be used.

An average fiber diameter of the cellulose nanofibers is preferably 2 to 500 nm, and more preferably 2 to 100 nm. When the average fiber diameter is 2 nm or larger, the production is technically easy, and a fiber state of high aspect ratio may be maintained. Furthermore, when the average fiber diameter is 500 nm or smaller, since components forming a bundle are not much, a reinforcement effect that sufficiently utilizes nano-dispersion may be obtained. By the way, the average fiber diameter here is obtained by averaging fiber diameters obtained by observing with a field emission type scanning electron microscope (FE-SEM).

As the cellulose nanofiber, one prepared in advance may be used, or a commercially available one may be used. As the commercially available one, one that is in an aqueous dispersion of 0.5 to 3 mass% may be used.

### (Inorganic Powder)

In the cellulose nanofiber-supporting inorganic powder of the present invention, the inorganic powder is a component that becomes a support of the cellulose nanofiber. As examples of the inorganic powder, silica, alumina, titanium dioxide, aluminum hydroxide, calcium carbonate, zinc carbonate, iron oxide, and carbon are cited and these are used as a mixture of at least one kind or two or more kinds thereof. Among these, silica and carbon are preferred, and silica is more preferred.

As the silica, fumed silica (dry silica) and precipitated silica (wet silica) are exemplified, and the fumed silica (dry silica) is preferred. A specific surface area due to a BET method of silica powder is preferably 50 to 400 m²/g, and more preferably 100 to 350 m²/g. When the specific surface area is 50 m²/g or larger, due to sufficient surface activity, the reactivity with the cellulose nanofiber is good. Furthermore, when the specific surface area is 400 m²/g or smaller, there is no fear of an increase of the viscosity, the handling property is favorable.

A shape of the inorganic powder may be any one of crushed state, spherical state, and fibrous state and is not particularly limited.

An average particle size of the inorganic powder is preferably 10 nm to 10 µm, and more preferably 10 nm to 1 µm. By the way, the average particle size here is an average primary particle size, and indicates an average value measured by an electron microscope, a laser scattering method, or a stretched sedimentation method.

In the cellulose nanofiber-supporting inorganic powder of the present invention, a mass ratio of the cellulose nanofiber and the inorganic powder is preferably 0.005 to 5 parts by mass of the cellulose nanofiber, more preferably 0.01 to 1 part by mass and still more preferably 0.1 to 1 part by mass relative to 100 parts by mass of the inorganic powder. When the cellulose nanofiber is 0.005 part by mass or larger, the reinforcement effect can be more surely obtained, and when it is 5 parts by mass or smaller, the cellulose nanofibers are difficult to flocculate with each other , there is no fear of a decrease of a component amount contributing to the reinforcement.

Furthermore, the cellulose nanofiber-supporting inorganic powder of the present invention is preferable to be one hydrophobized with a silicon-containing hydrophobizing agent. More specifically, it is preferable that a surface of the inorganic powder be hydrophobized with the silicon-containing hydrophobizing agent, a surface of the cellulose nanofiber be not hydrophobized with the silicon-containing hydrophobizing agent, or both surfaces of the inorganic powder and the cellulose nanofiber be hydrophobized with the silicon-containing hydrophobizing agent.

Thus, when the surface of the inorganic powder, or both surfaces of the inorganic powder and the cellulose nanofiber are hydrophobized, preferably, the inorganic powder tends to adsorb the cellulose nanofiber.

Examples of the silicon-containing hydrophobizing agents include: organo-silazanes such as alkyl silazane and vinyl silazane; and organo-silanes such as alkyl alkoxy silane, vinyl alkoxy silane or alkyl chlorosilane, vinyl chlorosilane. For example, organo-silazanes such as hexamethyldisilazane, diphenyl tetramethyldisilazane, divinyltetramethyldisilazane; organo alkoxysilanes such as methyl trimethoxy silane, methyl triethoxy silane, phenyl trimethoxy silane, dimethyl dimethoxy silane, vinyl trimethoxy silane, vinyl triethoxy silane, divinyl dimethoxy silane, vinyl methyl dimethoxy silane, vinyl tris (methoxyethoxy) silane; organochlorosilanes such as methyl trichlorosilane, phenyl trichlorosilane, vinyl trichlorosilane; or partial hydrolysis products thereof; and siloxane oligomer of polymerization degree of 50 or smaller having a Si-OH functional group or a Si-OR' (R' is a monovalent hydrocarbon group) at a molecular chain end can be exemplified, any of well-known ones can be used. Furthermore, the silicon-containing hydrophobizing agents may be used alone, or two or more kinds thereof may be used simultaneously or at different timings.

Furthermore, the cellulose nanofiber-supporting inorganic powder of the present invention may be granulated one.

As was described above, the cellulose nanofiber-supporting inorganic powder of the present invention may readily and uniformly disperse the cellulose nanofibers in a composition of a resin or a rubber and may improve the physical properties of the resin or rubber by adding to the composition.

### (Production Method of Cellulose Nanofiber-supporting Inorganic Powder)

In the present invention, a production method of a cellulose nanofiber-supporting inorganic powder including the following step (1) and a step (2) is provided.
(1) a step of mixing an inorganic powder and a dispersion in which a cellulose nanofiber is dispersed in an aqueous solvent, and
(2) a step of distilling off the aqueous solvent from the mixture, followed by drying.

In what follows, each of the steps will be detailed.

### (1) Mixing step

According to a production method the cellulose nanofiber-supporting inorganic powder of the present invention, first, as a first step, an inorganic powder and a dispersion in which the cellulose nanofibers are dispersed in an aqueous solvent are mixed.

Here, as the aqueous solvent, alcohols other than water may be used, however, water is preferable, among these ionic exchange water and pure water are more preferable.

A concentration of the cellulose nanofiber dispesion is preferably 0.01 to 5 mass%, more preferably 0.01 to 2 mass%, and particularly preferably 0.1 to 1 mass%. In such a case of using a commercially available cellulose nanofiber aqueous dispersion, when a dispersion having a certain concentration is used by diluting in advance to a desired concentration, by diluting by separating preferably two times or more, by separating more preferably two to five times, the stability of the dispersion after dilution is excellent, and the cellulose nanofiber preferably tends to be adsorbed on a surface of the inorganic powder.

In the cellulose nanofiber dispersion, since the cellulose nanofibers flocculate with time to tend to increase the viscosity, it is preferable to use a homogenizer or the like before use or during dilution.

As a method of mixing the inorganic powder in the cellulose nanofiber dispersion, the inorganic powder alone may be added, or one obtained by dispersing the inorganic powder separately in a solvent may be added to the cellulose nanofiber dispersion. As a device of mixing, though appropriately selected depending on an addition amount and an amount to be treated, in a small case of about several hundred grams, a flask and a stirring blade may be used, and a planetary mixer, a homomixer, homogenizer, or a rotation/revolution mixer (THINKY Mixer manufactured by THINKY Corporation or the like) may be also used.

Although the inorganic powder may be used as it is, the step (1) may be performed with hydrophobized inorganic powder obtained by performing a step of hydrophobizing a surface of the inorganic powder in advance with a silicon-containing hydrophobizing agent before the step (1). Alternatively, in the step (1), a silicon-containing hydrophobizing agent is further added to the inorganic powder and the dispersion of a cellulose nanofiber and mixed to hydrophobize both surfaces of the inorganic powder and the cellulose nanofiber with a silicon-containing hydrophobizing agent. It is preferable to use the inorganic powder having a hydrophobized surface, because the cellulose nanofibers tends to be adsorbed.

Although an amount used of the silicon-containing hydrophobizing agent may be appropriately selected depending on a kind or a treatment method of the inorganic powder, the silicon-containing hydrophobizing agent is preferable to be 0.01 to 5 parts by mass and more preferable to be 0.1 to 1 part by mass relative to 100 parts by mass of the inorganic powder.

By the way, the cellulose nanofiber, inorganic powder, and silicon-containing hydrophobizing agent, which are used, ones same as those cited in the description of the cellulose nanofiber-supporting inorganic powder may be used.

### (2) Drying Step

In the production method of the cellulose nanofiber-supporting inorganic powder of the present invention, next, as a second step, the aqueous solvent that is a dispersion medium is distilled from the mixture prepared in the step (1) to dry the cellulose nanofiber-supporting inorganic powder.

In the drying step, by drying the mixture (cellulose nanofiber/inorganic powder mixed dispersion) by a method selected from, for example, a heating dryer, a decompression dryer, a heating decompression dryer and a freeze dryer, the cellulose nanofiber-supporting inorganic powder in which the cellulose nanofibers are supported (adsorbed) on a surface of the inorganic powder may be obtained.

Although a drying temperature may be appropriately adjusted due to a drying method, it is preferable to set at 200°C or lower. When it is set at 200°C or lower, there is no fear of deterioration of the cellulose nanofiber.

As a device used in the drying step, when a device used in the mixing step can be used to do decompression heating, it may be used as it is, other than this, a batch type drying device such as a vacuum box type dryer, an air circulation dyer, or a rotary evaporator, or a continuous dryer such as a spray dry type dryer, a screw conveyer type dryer, or a drum type dryer may be used, and these may be combined and used. Furthermore, it is useful to heighten adsorptivity of the cellulose nanofiber and the inorganic powder by further adding a heating step, after the aqueous solvent is distilled away by vacuum drying or vacuum heating drying.

Although a drying time may be appropriately optimized depending on a device and a drying condition, it is desirable to select the drying condition such that a nonvolatile component after heating a dried mixed-powder at 105°C for 3 hours is 80% or higher, preferably 90% or higher.

As was described above, the producing method of the cellulose nanofiber-supporting inorganic powder of the present invention may readily and uniformly disperse the cellulose nanofibers in a composition of a resin or a rubber, and by adding to the composition, the cellulose nanofiber-supporting inorganic powder that can improve the physical properties of the resin or rubber can be readily produced.

### EXAMPLES

In what follows, the present invention will be specifically described with reference to examples and comparative examples, however, the present invention is not limited to these.

### (Production of Cellulose Nanofiber-supporting Silica)

In 50 g of commercial available TEMPO oxidized cellulose nanofiber dispersion (manufactured by Nippon Paper Industries Co., Ltd., average fiber diameter: 3 nm, average chain length: 500 nm, effective component: 1 mass%), 50 g of ion exchange water was added and dispersed with a homogenizer (3,000 rpm x 3 minutes), this was repeated 5 times to dilute to 300 g in total, thus, a cellulose nanofiber diluted solution was prepared. Next, in a flask, 200 parts by mass of fumed silica (MU-20, manufactured by Shin-Etsu Chemical Co., Ltd.) having a specific surface area of 200 m²/g due to a BET method, 30 g parts by mass of water, 80 parts by mass of polysiloxane with Si-OH group attached to both ends of a molecular chain which has an OH group amount of 0.7 mol/100g, 3 parts by mass of vinyltrimethoxysilane, and 0.5 part by mass of 1,1,1,3,3,3-hexamethyldisilazane were charged, followed by stirring to be homogeneous. Thereto, 300 g of the cellulose nanofiber diluted solution was charged, followed by decompression drying at 90°C with a rotary evaporator. After substantial removal of moisture, furthermore, after substituting a system inside with a nitrogen gas, followed by leaving to stand at 150°C or 200°C for 2 hours, and cellulose nanofibers adsorbed and supported silica powder was obtained. In what follows, one obtained by drying at 150°C is named as "CNF supported silica 1", and one obtained by drying at 200°C is named as "CNF supported silica 2."

### (Comparative Silica)

A comparative silica was obtained by performing the same operation as the production of the cellulose nanofiber-supporting silica except that the drying is performed without adding the cellulose nanofiber diluted solution. An additional drying was performed at 150°C for two hours.

### (Preparation of Rubber Compound)

### (Example 1)

To 100 parts by mass of organopolysiloxane made of 99.9 mol% of a dimethyl siloxane unit, 0.075 mol% of methyl vinyl siloxane unit and 0.025 mol% of dimethyl divinyl siloxane unit and having an average polymerization degree of about 6,000, 40 parts by mass of the CNF supported silica 1 was blended at room temperature with a two roller mill, and a rubber compound was prepared.

### (Example 2)

A rubber compound was prepared in the same manner as example 1 except that the CNF supported silica 2 was used in place of the CNF supported silica 1.

### (Comparative Example 1)

A rubber compound was prepared in the same manner as example 1 except that the comparative silica was used in place of the CNF supported silica 1.

### (Comparative Example 2)

Although it was tried to prepare a rubber compound in the same manner as example 1 except that in place of 40 parts by mass of the CNF supported silica 1, 40 parts by mass of the fumed silica (MU-20, manufactured by Shin-Etsu Chemical Co., Ltd.) used when preparing the CNF supported silica and 10 parts by mass of the commercially available TEMPO oxidized cellulose nanofiber dispersion (average fiber diameter: 3 nm, average chain length: 500 nm, and effective component: 1 mass%, manufactured by Nippon Paper Industries Co., Ltd.) were used, the dispersion oozed during kneading, the cellulose nanofibers could not be uniformly dispersed. Therefore, the following evaluation was not performed.

### (Example 3)

To 100 parts by mass of general extrusion silicone rubber compound KE-541-U (manufactured by Shin-Etsu Chemical Co., Ltd.), 15 parts by mass of the CNF supported silica 1 were blended with a two roller mill, and a rubber compound was prepared.

### (Example 4)

A rubber compound was prepared in the same manner as Example 3 except that the CNF supported silica 2 was used in place of the CNF supported silica 1.

### (Comparative Example 3)

Without blending the CNF supported silica, the KE-541-U was used as it is.

### (Comparative Example 4)

Without blending the CNF supported silica, KE-561-U (manufactured by Shin-Etsu Chemical Co., Ltd.) having higher hardness than KE-541-U was used as it is.

### (Comparative Example 5)

A rubber compound was prepared in the same manner as Example 3 except that the comparative silica was used in place of the CNF supported silica 1.

### (Comparative Example 6)

Although it was tried to prepare a rubber compound in the same manner as example 3 except that in place of 15 parts by mass of the CNF supported silica 1, 15 parts by mass of the fumed silica (MU-20, manufactured by Shin-Etsu Chemical Co., Ltd.) used when preparing the CNF supported silica and 4 parts by mass of the commercially available TEMPO oxidized cellulose nanofiber dispersion (average fiber diameter: 3 nm, average chain length: 500 nm, and effective component: 1 mass%, manufactured by Nippon Paper Industries Co., Ltd.) were used, the dispersion oozed during kneading, the cellulose nanofibers could not be uniformly dispersed. Therefore, the following evaluation was not performed.

### (Preparation and Evaluation of Cured Rubber Sheet)

To 100 parts by mass of each of the rubber compounds, vulcanizing agents for addition type rubber C-25A(manufactured by Shin-Etsu Chemical Co., Ltd.)/0.5 part by mass, and C-25B/2.0 parts by mass were sequentially and uniformly mixed, and the CNF supported silica, comparative silica or the CNF were evaluated whether these were uniformly dispersed. The obtained mixtures were press-cured at 120°C for 10 minutes to prepare rubber sheets having a thickness of 2 mm. The obtained sheets were evaluated by a method according to JIS K 6249:2003. Results are shown in Table 1 and Table 2.

**(Table 1)**

| | Example 1 | Example 2 | Comparative Example 1 | Comparative Example 2 |
|---|---|---|---|---|
| CNF supported silica/ Comparative silica/ CNF | CNF supported silica 1 | CNF supported silica 2 | Comparative silica | CNF |
| Uniform dispersion into rubber compound | OK | OK | OK | NG |
| Density (g/cm³) | 1.14 | 1.14 | 1.14 | - |
| Hardness (Type-A) | 52 | 55 | 51 | - |
| Tensile strength (MPa) | 10.0 | 10.2 | 8.0 | - |
| Elongation at break (%) | 580 | 550 | 600 | - |
| Tearing strength(crescent type) (kN/m) | 55 | 68 | 38 | - |
| Tearing strength (trouser type)(kN/m) | 12 | 16 | 9 | - |

**(Table 2)**

| | Example 3 | Example 4 | Comparative example 3 | Comparative example 4 | Comparative example 5 | Comparative example 6 |
|---|---|---|---|---|---|---|
| CNF supported silica/comparative silica/CNF | CNF supported silica 1 | CNF supported silica 2 | - | - | Comparative silica | CNF |
| Uniform dispersion into rubber compound | OK | OK | - | - | OK | NG |
| Density (g/cm³) | 1.17 | 1.17 | 1.10 | 1.17 | 1.17 | - |
| Hardness (type-A) | 54 | 53 | 34 | 53 | 53 | - |
| Tensile strength (MPa) | 10.4 | 9.9 | 8.0 | 8.4 | 9.0 | - |
| Elongation at break (%) | 690 | 680 | 790 | 540 | 620 | - |
| Tearing strength (Crescent type) (kN/m) | 26 | 28 | 11 | 18 | 19 | - |
| Tearing strength (trouser type) (kN/m) | 17 | 16 | 11 | 10 | 12 | - |

As shown in Table 1, while in Comparative example 2 where the CNF was added as it is without supporting the CNF on the silica, the CNFs could not be uniformly dispersed in the rubber compound, in Examples 1, 2 where the CNF supported silica was used, the CNF supported silica could be uniformly dispersed in the rubber compound. Furthermore, in Examples 1, 2 where the CNF supported silica was used, compared with Comparative example 1 where the comparative silica that does not support the CNF was used, the tearing strength of the cured material is remarkably enhanced.

Furthermore, as shown in Table 2, also when a rubber compound different from Examples 1 and 2 was used, while in Comparative example 6 where the CNF was added as it is without supporting the CNF on the silica, the CNFs could not be uniformly dispersed in the rubber compound, in Examples 3 and 4 where the CNF supported silica was used, the CNF supported silica could be uniformly dispersed in the rubber compound. Furthermore, in Examples 3 and 4 where the CNF supported silica was used, compared with Comparative examples 3 and 4 where the CNF supported silica was not blended and Comparative example 5 where the comparative silica that does not support the CNF is used, the tearing strength was remarkably enhanced.

From what was described above, it was clarified that the cellulose nanofiber-supporting inorganic powder of the present invention can readily and uniformly disperse the cellulose nanofibers in the composition of a resin or a rubber, and by adding to the composition, even by dry mixing and in a slight amount addition, the physical properties of the resin or rubber can be improved.

It should be noted that the present invention is not limited to the above-described embodiments. The embodiments are just examples, and any examples that have substantially the same feature and demonstrate the same functions and effects as those in the technical concept disclosed in claims of the present invention are included in the technical scope of the present invention.

## Claims

1. A cellulose nanofiber-supporting inorganic powder comprising:
a cellulose nanofiber; and
an inorganic powder,
in which the cellulose nanofiber is supported on the inorganic powder.

2. The cellulose nanofiber-supporting inorganic powder according to claim 1, wherein the cellulose nanofiber-supporting inorganic powder contains the cellulose nanofiber of 0.005 to 5 parts by mass relative to 100 parts by mass of the inorganic powder.

3. The cellulose nanofiber-supporting inorganic powder according to claim 1 or claim 2, wherein the cellulose nanofiber has an average fiber diameter of 2 to 500 nm.

4. The cellulose nanofiber-supporting inorganic powder according to any one of claims 1 to 3, wherein
the inorganic powder is one or more kinds selected from silica, alumina, titanium dioxide, aluminum hydroxide, calcium carbonate, zinc carbonate, iron oxide, and carbon.

5. The cellulose nanofiber-supporting inorganic powder according to any one of claims 1 to 4, wherein the cellulose nanofiber-supporting inorganic powder comprises the inorganic powder a surface of which is hydrophobized with a silicon-containing hydrophobizing agent, and the cellulose nanofiber a surface of which is not hydrophobized with the silicon-containing hydrophobizing agent.

6. The cellulose nanofiber-supporting inorganic powder according to any one of claims 1 to 4, wherein the cellulose nanofiber-supporting inorganic powder comprises the inorganic powder and the cellulose nanofiber both surfaces of which are hydrophobized with a silicon-containing hydrophobizing agent.

7. A method of producing a cellulose nanofiber-supporting inorganic powder, comprising:
(1) a step of mixing an inorganic powder and a dispersion in which a cellulose nanofiber is dispersed in an aqueous solvent, and
(2) a step of distilling off the aqueous solvent from the mixture, followed by drying.

8. The method of producing cellulose nanofiber-supporting inorganic powder according to claim 7, wherein the dispersion has a concentration of the cellulose nanofiber of 0.01 to 5 mass%.

9. The method of producing cellulose nanofiber-supporting inorganic powder according to claim 7 or claim 8, wherein the cellulose nanofiber has an average fiber diameter of 2 to 500 nm.

10. The method of producing cellulose nanofiber-supporting inorganic powder according to any one of claims 7 to 9, wherein the inorganic powder is one or more kinds selected from silica, alumina, titanium dioxide, aluminum hydroxide, calcium carbonate, zinc carbonate, iron oxide, and carbon.

11. The method of producing cellulose nanofiber-supporting inorganic powder according to any one of claims 7 to 10, further comprising: before the step (1), a step of hydrophobizing in advance a surface of the inorganic powder with a silicon-containing hydrophobizing agent.

12. The method of producing cellulose nanofiber-supporting inorganic powder according to any one of claims 7 to 10, wherein
in the step (1), a silicon-containing hydrophobizing agent is further added to the inorganic powder and the dispersion and mixed to hydrophobize both surfaces of the inorganic powder and the cellulose nanofiber with a silicon-containing hydrophobizing agent.
